# EUROPÄISCHE PATENTSCHRIFT

(11) **EP 3 078 842 B1**
(45) Veröffentlichungstag und Bekanntmachung des Hinweises auf die Patenterteilung: **08.07.2020**
(21) Anmeldenummer: 16159285.2
(22) Anmeldetag: 08.03.2016
(51) Int. Cl.: F02M 21/02

(54) **VENTILANORDNUNG**
VALVE ASSEMBLY
SYSTÈME DE VANNE

(30) Priorität: 27.03.2015 DE 102015104799
(43) Veröffentlichungstag der Anmeldung: 12.10.2016
(73) Patentinhaber: Mesa Parts GmbH, 79853 Lenzkirch (DE)
(72) Erfinder: Dr. Gläser, Stefan, 8598 Bottighofen (CH)
(74) Vertreter: Westphal, Mussgnug & Partner Patentanwälte mbB

(56) Entgegenhaltungen:
- EP-A2- 1 860 314
- EP-B1- 1 888 956
- US-A- 4 545 345

## Beschreibung

Die vorliegende Erfindung betrifft eine Ventilanordnung gemäß dem Oberbegriff des Patentanspruchs 1. Aus dem Stand der Technik sind verschiedentlich Ventilanordnungen zur Zumessung eines gasförmigen Brennstoffes in Brennkraftmaschinen mit einer Mehrzahl elektromagnetisch betätigbarer Schaltventile eines Einzelquerschnitts, wobei die Schaltventile als Sitzventile ausgestaltet sind, die Ventilanordnung einem Verbrennungsraum zuordenbar ist und die Ventilanordnung einen Nennquerschnitt zur Bereitstellung eines vorgegebenen Massenstroms aufweist, bekannt. Solche Ventilanordnungen sind beispielsweise in der WO 2007/036 382 A1 und der US 4,545,345, der EP 1 888 956 B1 oder der EP 1 860 314 A2 offenbart.

Im Stand der Technik kommen für sogenannte Großgasmotoren, d. h. insbesondere für Gasmotoren mit einer Leistung von vorzugsweise wenigstens 500 kW Plattenventile als sogenannte Einblasventile für den gasförmigen Brennstoff zum Einsatz.

Solche Plattenventile weisen einen Gaseinlass und einen Gasauslass auf, wobei zwischen Einlass und Auslass eine mehrfach perforierte Trennplatte sowie eine hierauf angepasstes plattenförmiges Dichtelement zum Verschließen der Öffnungen in der Trennplatte angeordnet sind. Das so aufgebaute Plattenventil ist über einen elektromagnetischen Antrieb betätigbar, sodass das Dichtelement entweder von der Trennplatte abgehoben ist und damit die Durchlässe freigibt oder auf dieser aufliegt und die Durchlässe abdichtend verschließt. Dieser Aufbau wird im Stand der Technik gewählt, da bislang nur auf diese Weise die benötigten großen Nennquerschnitte von bis 1.500 mm² erreicht werden können.

Die aus dem Stand der Technik bekannten Plattenventile weisen verschiedene Nachteile auf, die nachfolgend kurz beschrieben werden.

Zum einen bedürfen derartige Plattenventile einer hochpräzisen Lagerung des Dichtelements, da nur bei einer absolut parallelen Ausrichtung von Dichtelement und Trennplatte ein gleichmäßiges Öffnen des Ventils erreicht und ein zureichendes Dichtverhalten bei einer vertretbaren Leckage erreicht werden kann.

Darüber hinaus wird es als nachteilig empfunden, dass die aus dem Stand der Technik bekannten Plattenventile einen vergleichsweise große Bauraum benötigen, da die minimal benötigte Grundfläche durch die Größe der verwendeten Trenn- bzw. Dichtplatte bestimmt ist. Solche Plattenventile sind auf Grund ihres Aufbaus relativ anfällig gegen einen Partikeleintrag im Gasstrom, da sich solche Partikel im Bereich der Trennplatte ablagern können und damit die Funktion des Plattenventils insgesamt beeinträchtigt werden kann. Eine Redundanz ist nicht gegeben.

Es ist die Aufgabe der vorliegenden Erfindung eine Ventilanordnung zur Verfügung zu stellen, die die aus dem Stand der Technik bekannten Nachteile nicht aufweist, eine erhöhte Zuverlässigkeit aufweist und flexibler einsetzbar ist. Diese Aufgabe wird durch eine Ventilanordnung mit den Merkmalen des Patentanspruchs 1 gelöst. Vorteilhafte Weiterbildungen sind in abhängigen Patentansprüche widergegeben.

Die Verwendung einer erfindungsgemäßen Ventilanordnung ist Gegenstand des Patentanspruchs 10.

Eine erfindungsgemäße Ventilanordnung zum Zumessen eines gasförmigen Brennstoffes in Brennkraftmaschinen mit einer Mehrzahl elektromagnetisch betätigbarer Schaltventile eines Einzelquerschnitts, wobei der Einzelquerschnitt eines Schaltventils einen maximal möglichen Querschnitt des Ventils bei vollständiger Öffnung desselben darstellt, wobei die Schaltventile als Sitzventile ausgestaltet sind, die Ventilanordnung einem Verbrennungsraum der Brennkraftmaschine zuordenbar ist und die Ventilanordnung einen Nennquerschnitt zur Bereitstellung eines vorgegebenen Massenstroms aufweist, zeichnet sich dadurch aus, dass die Sitzventile derart ausgelegt sind, dass eine Summe der Einzelquerschnitte größer als der Nennquerschnitt ist, ein effektiver Querschnitt, der die Summe der bei einem Hub sämtlicher Ventile der Ventilanordnung freigegebenen Querschnitte darstellt gleich dem Nennquerschnitt ist, wobei der Ventilhub der Ventile kleiner als ein maximaler Ventilhub bei vollständiger Öffnung derselben ist, und der effektive Querschnitt geringer als die Summe der Einzelquerschnitte ist.

Der vorliegenden Erfindung liegt damit die grundlegende Erkenntnis zu Grunde, dass durch die Verwendung einer Mehrzahl elektromagnetisch betätigbarer, als Sitzventile ausgestalteter Schaltventile eine flexible und gleichzeitig robuste Ventilanordnung geschaffen werden kann, wobei dadurch, dass die Sitzventile so ausgelegt sind, dass eine Summe der Einzelquerschnitte größer als der Nennquerschnitt ist, eine Anordnung geschaffen wird, die bei einem maximalen Ventilhub in jedem Fall den zur Bereitstellung des vorgegebenen Massenstroms notwendigen Nennquerschnitt aufweist. Dadurch, dass eine Summe dieser Einzelquerschnitte größer als der notwendige Nennquerschnitt sein kann, ist es möglich, mit einem Ventilhub sämtlicher Sitzventile, der geringer ist als ein maximaler Ventilhub einen effektiven Querschnitt freizugeben, der dem Nennquerschnitt entspricht, jedoch geringer oder gleich der Summe der Einzelquerschnitte ist.

Es wird auf diese Weise erreicht, dass durch eine Vervielfältigung der verwendeten Sitzventile eine Reduzierung des notwendigen Ventilhubs zur Freigabe des Nennquerschnitts möglich wird. Durch eine Reduzierung der Einzelquerschnitte im Vergleich zu einem Einzelventil kann außerdem eine Optimierung der Arbeitspunktlage der einzelnen Sitzventile im Kraft-Wegdiagramm stattfinden, sodass insgesamt eine im Vergleich zu einem Einzelventil reduzierte Hubarbeit erreicht werden kann. Durch einen verringerten Hub lassen sich ferner reduzierte Schaltzeiten erreichen.

Vorteilhafterweise weisen die Schaltventile jeweils einen eigenen elektromagnetischen Antrieb auf, sodass sowohl die Ventile als auch die Antriebe zueinander redundant ausgelegt sind.

Eine optimale Steuerung der Ventilanordnung lässt sich erreichen, wenn die Schaltventile gemeinsam oder separat ansteuerbar sind, wobei eine separate Ansteuerbarkeit der Schaltventile eine besonders geschickte Ausgestaltung darstellt. Bei einer separaten Ansteuerbarkeit ist es nämlich möglich, dass zur Reduzierung des durch die Ventilanordnung zur Verfügung gestellten Massenstroms lediglich einzelne Ventile oder eine Gruppe von Ventilen geöffnet wird, sodass ein entsprechend reduzierter effektiver Querschnitt freigegeben wird.

Die vorliegende Erfindung zeigt ihren Effekt bereits bei einer Ventilanordnung mit wenigstens zwei Schaltventilen, wobei die positiven Effekte bei Ventilanordnungen mit vier Schaltventilen oder beispielsweise sechs Schaltventilen noch verstärkt zur Geltung kommen.

Eine besonders kompakte Anordnung lässt sich erreichen, wenn die Schaltventile in einem gemeinsamen Gehäuse angeordnet sind, wobei das Gehäuse eine einzige Zuleitung und eine einzige Ableitung für den gasförmigen Brennstoff aufweist. Es kann auf diese Weise eine Ventilanordnung zur Verfügung gestellt werden, die für den Anwender von außen gesehen wie ein einziges Ventil wirkt, jedoch durch die Verwendung einer Vielzahl von Schaltventilen im Inneren des Gehäuses eine deutlich überlegene Arbeitsweise aufweist.

Produktionstechnisch lässt sich bei der Herstellung der vorliegenden Ventilanordnung eine Vielzahl von Vorteilen realisieren, wenn die Schaltventile einen identischen Aufbau aufweisen. Durch die Verwendung von Gleichteilen und die Vervielfachung der Anzahl von Ventilen in einer Ventilanordnung können die Stückzahl für Einzelteile gezielt erhöht und damit Produktionskosten gesenkt werden.

Hinsichtlich der Herstellung sowie der Leckage ist es vorteilhaft, wenn die Schaltventile einen im Wesentlichen drehteilbasierten Aufbau aufweisen. Durch die Verwendung von Drehteilen beim Aufbau der einzelnen Schaltventile der Ventilanordnung können mit einem einfachen Herstellungsprozess Bauteile hoher Güte mit insbesondere geringen Toleranzen hergestellt werden und damit eine deutlich reduzierte Leckage der Ventilanordnung im Vergleich zu beispielsweise Plattenventilen, wie sie aus dem Stand der Technik bekannt sind, gewährleistet werden.

Um geringe Schaltzeiten und gleichzeitig einen geringen Verschleiß der einzelnen Schaltventile zu gewährleisten, sollte eine maximaler Ventilhub weniger als 5 mm, vorzugweise weniger als 3 mm betragen. Durch einen geringen Ventilhub können einerseits geringe Schaltzeiten und andererseits durch den hieraus resultierenden kürzeren Beschleunigungsweg eines Dichtelements beim Schließen des Ventils auch verringerte Verschleißerscheinungen an Dichtelement und Ventilsitz erreicht werden.

Eine bevorzugte Ventilanordnung weist einen Nennquerschnitt von etwa 700 mm² auf, wobei die Ventilanordnung aus sechs Schaltventilen aufgebaut ist und ein Ventilhub etwa 1,5 mm beträgt.

Eine erfindungsgemäße Ventilanordnung findet vorzugweise in einem Großgasmotor Verwendung, wobei dieser Großgasmotor vorzugweise für maritime und/oder stationäre Anwendungen ausgelegt ist und eine Leistung von vorzugsweise wenigstens 500 kW aufweist.

Im Rahmen der vorliegenden Anmeldung soll als Nennquerschnitt der Querschnitt zur Gewährleistung eines vorgegebenen Massenstroms verstanden werden. Als Einzelquerschnitt wird ein maximal möglicher Querschnitt eines Ventils bei vollständiger Öffnung desselben verstanden. Der effektive Querschnitt stellt in der vorliegenden Anmeldung die Summe der bei einem Hub sämtlicher Ventile der Ventilanordnung freigegebenen Querschnitte dar. Schaltventile im Sinne der vorliegenden Anmeldung sind Ventile mit zwei Schaltstellungen, wobei die Ventile vorzugsweise als normal geschlossene Ventile ausgestaltet sind. Ein Hub der Schaltventile ist gemäß der vorliegenden Anmeldung so begrenzt, dass ein bei einem Ventilhub freigegebener Querschnitt kleiner oder gleich dem Einzelquerschnitt des Schaltventils ist, insbesondere ist der Hub der Ventile derart gewählt, dass in einer Ventilanordnung die Summe sämtlicher freigegebenen Querschnitte dem effektiven Querschnitt entspricht. Ein maximaler Ventilhub ist der Ventilhub, der für ein Ventil notwendig ist um den Einzelquerschnitt, also den maximal möglichen Querschnitt freizugeben. Insbesondere kann der Ventilhub beispielsweise durch einen mechanischen Anschlag auf einen Wert kleiner als der maximale Ventilhub begrenzt sein und damit den freigegebenen Querschnitt begrenzen.

Die vorliegende Erfindung wird nachfolgend anhand von Ausführungsbeispielen unter Bezugnahme auf die beigefügten Figuren eingehend erläutert. Es zeigen:
- Fig. 1: eine perspektivische Ansicht im Teilschnitt eines ersten Ausführungsbeispiels einer Ventilanordnung mit vier Sitzventilen,
- Fig. 2: eine Schnittdarstellung der Ventilanordnung aus Figur 1,
- Fig. 3: eine perspektivische Darstellung im Teilschnitt eines zweiten Ausführungsbeispiels einer Ventilanordnung mit zwei Sitzventilen,
- Fig. 4: eine perspektivische Darstellung im Teilschnitt eines dritten Ausführungsbeispiels einer Ventilanordnung mit sechs Sitzventilen,
- Fig. 5: in einer Kennlinie die Abhängigkeit des Ventilhubesvon der Anzahl der Sitzventile bei identischen Einzelquerschnittenbei gegebenem Nennquerschnitt,
- Fig. 6: die Abhängigkeit des Hubes von der Anzahl der Sitzventile bei konstantem Gesamtquerschnitt, die notwendige Hubarbeit für ein Sitzventil sowie die Gesamthubarbeit,
- Fig. 7: ein Kennlinienfeld eines elektromagnetischen Antriebs sowie die Arbeitspunkte unterschiedlicher Ausführungsbeispiele und
- Fig. 8a-c: als Prinzipskizze in Draufsicht in Fig. 8a ein Einzelventil mit einem ersten Einzelquerschnitt, in Figur 8b vier Sitzventile mit dem Einzelquerschnitt des Ventils aus Figur 8a und in Figur 8c vier Sitzventile mit einem zweiten Einzelquerschnitt, der einem Viertel des ersten Einzelquerschnitts entspricht.

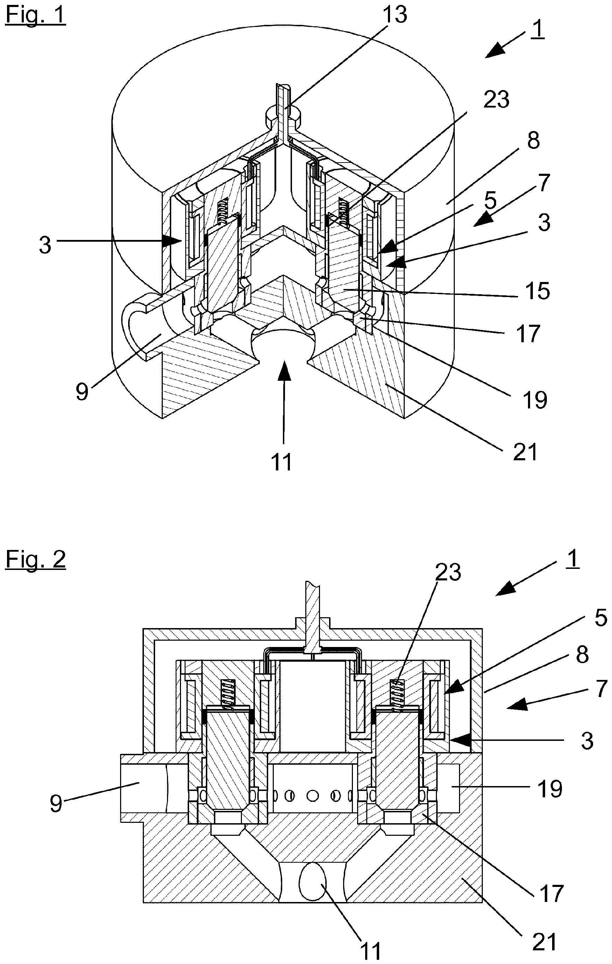

Figur 1 zeigt eine perspektivische Darstellung eines Teilschnitts durch ein erstes Ausführungsbeispiel einer Ventilanordnung 1 mit vier als Sitzventile ausgebildeten Schaltventilen 3. Die Ventilanordnung 1 weist ein Gehäuse 7 auf, das im Wesentlichen aus einer Basisplatte 21 sowie einem Deckel 8 gebildet ist. In der Basisplatte 21 ist ein Druckraum 19 ausgebildet, der mit einer Zuleitung 9 für einen gasförmigen Brennstoff verbunden ist. Die Schaltventile 3 sind in Bohrungen der Basisplatte 21 derart angeordnet, dass sie den Druckraum 19 von einem Auslass 11, der ebenfalls in der Basisplatte 21 gebildet ist, dichtend abtrennen können.

Im vorliegenden Ausführungsbeispiel sind die vier Schaltventile 3 über eine gemeinsame elektrische Zuleitung ansteuerbar. Die einzelnen Schaltventile 3 weisen zu deren Betätigung einen elektromagnetischen Antrieb 5, der im Wesentlichen aus einer auf einem Spulenträger angeordneten Magnetspule, die geeignet angeordnet ist, auf einen Anker des Schaltventils 3 zu wirken gebildet ist. Die in Figur 1 gezeigten Schaltventile 3 sind normal geschlossene Schaltventile 3 und sind hierfür mit einer Druckfeder 23 in Schließrichtung federbeaufschlagt. Die Schaltventile 3 sind ferner als sogenannte Kegelsitzventile ausgebildet, d. h. dass ein zwischen dem Druckraum 19 und der Ableitung 11 ausgebildeter Sitz 17 der Schaltventile 3 sowie der mit dem Sitz 17 zusammenwirkende Anker 15 an ihrer Kontaktfläche eine kegelförmige Kontur aufweisen.

Das Ausführungsbeispiel aus Figur 1 ist in Figur 2 in einer Schnittdarstellung nochmals gezeigt. In dieser Schnittdarstellung ist deutlich die Anordnung der Schaltventile 3 in der Basisplatte 21 zu erkennen, wobei die Schaltventile 3 in die Basisplatte 21 beispielsweise eingeschraubt, eingepresst, eingeschweißt, eingelötet oder anderweitig mit dieser verbunden sein können. Auch kann der Sitz in der Basisplatte 21 befestigt sein und die Schaltventile 3 können axial zugeordnet und ausgerichtet in dem Deckel 8 befestigt sein.

Durch die Anordnung der Schaltventile 3 in einem gemeinsamen Gehäuse 7 ist die Ventilanordnung 1 als eine separat handhabbare Einheit ausgebildet, die beispielsweise über geeignete Befestigungsmittel, beispielsweise einen Flansch, der an der Basisplatte 21 angeordnet ist, ein geeignetes Außengewinde oder andere geeignete Befestigungsmittel unmittelbar vor einem Brennraum, beispielsweise einem Zylinder einer Brennkraftmaschine anordenbar ist.

Bei dem in den Figuren 1 und 2 dargestellten Ausführungsbeispiel sind die vier Schaltventile in einer Draufsicht jeweils um 90° versetzt angeordnet, sodass sich insgesamt ein zylindrischer Aufbau der Ventilanordnung 1 ergibt. Es sind aber auch alternative Anordnungen, beispielsweise in Reihe denkbar.

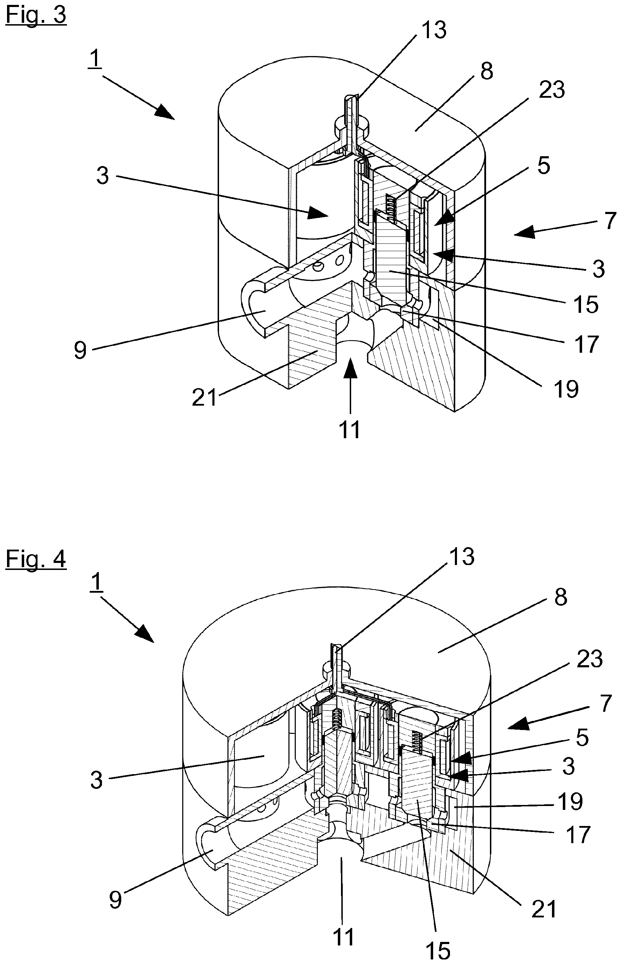

Figur 3 zeigt ein zweites Ausführungsbeispiel einer Ventilanordnung 1, wobei bei dem in Figur 3 dargestellten Ausführungsbeispiel zwei Schaltventile 3 in einem gemeinsamen Gehäuse 7 angeordnet sind. Da sich der Aufbau der Ventilanordnung 1 sowie der einzelnen Schaltventile 3 von den bezüglich der Figuren 1 und 2 beschriebenen Komponenten nicht unterscheidet, wird diesbezüglich auf die vorangegangene Beschreibung verwiesen.

Figur 4 zeigt ein drittes Ausführungsbeispiel einer Ventilanordnung 1, bei der in einem gemeinsamen Gehäuse 7 insgesamt sechs Schaltventile 3 angeordnet sind. In einer Draufsicht ist ein erstes Schaltventil 3 zentrisch angeordnet, wobei die verbleibenden fünf Schaltventile 3 auf einer Kreislinie um dieses erste Schaltventil 3 herum angeordnet sind. Dies stellt eine weitere Anordnungsmöglichkeit dar.

Um auch hier unnötige Wiederholungen zu vermeiden, wird auf die Beschreibung der Ventilanordnung aus den Figuren 1 und 2 sowie deren Komponenten verwiesen.

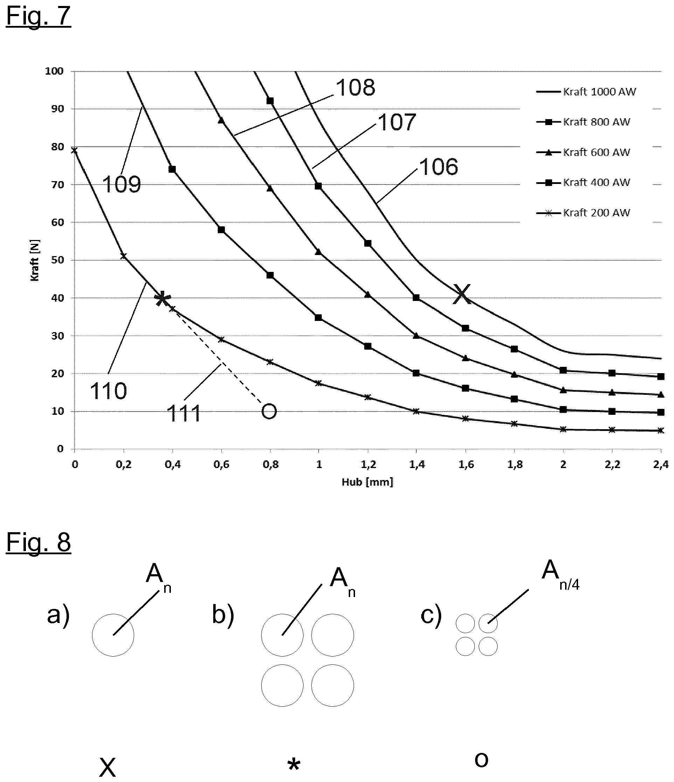

Um die Wirkungsweise und Effekte, die mit den Ventilanordnungen 1 gemäß der vorliegenden Anmeldung erreicht werden können, zu verdeutlichen, zeigt die Figur 8 in einer schematischen Darstellung drei unterschiedliche Ventilanordnungen 1 in einer Draufsicht, wobei lediglich die Einzelquerschnitte Aₙ der Schaltventile 3 dargestellt sind und zur Vereinfachung davon ausgegangen wird, dass der jeweilige Einzelquerschnitt Aₙ zur Berechnung der zur Ventilöffnung notwendigen Hubarbeit Wₕ auch der druckexponierten Fläche des Ventils entspricht.

In Figur 8a ist ein einzelnes Schaltventil 3 mit einem Einzelquerschnitt Aₙ gezeigt. Figur 8b zeigt vier Schaltventile 3, wobei jedes der Schaltventile 3 einen Einzelquerschnitt Aₙ wie das Ventil aus Figur 8a aufweist. In Figur 8c sind vier Schaltventile 3 gezeigt, wobei eine Summe der vier Einzelquerschnitte dem Querschnitt des in Figur 8a gezeigten Schaltventils 3 entspricht, also jedes der Schaltventile einen Querschnitt Aₙ/4 aufweist.

Unter den jeweiligen Ventilanordnungen in Figuren 8a bis c sind Symbole gezeigt, mit denen die einzelnen Anordnungen in den nachfolgend beschriebenen Kennlinien eingezeichnet sind.

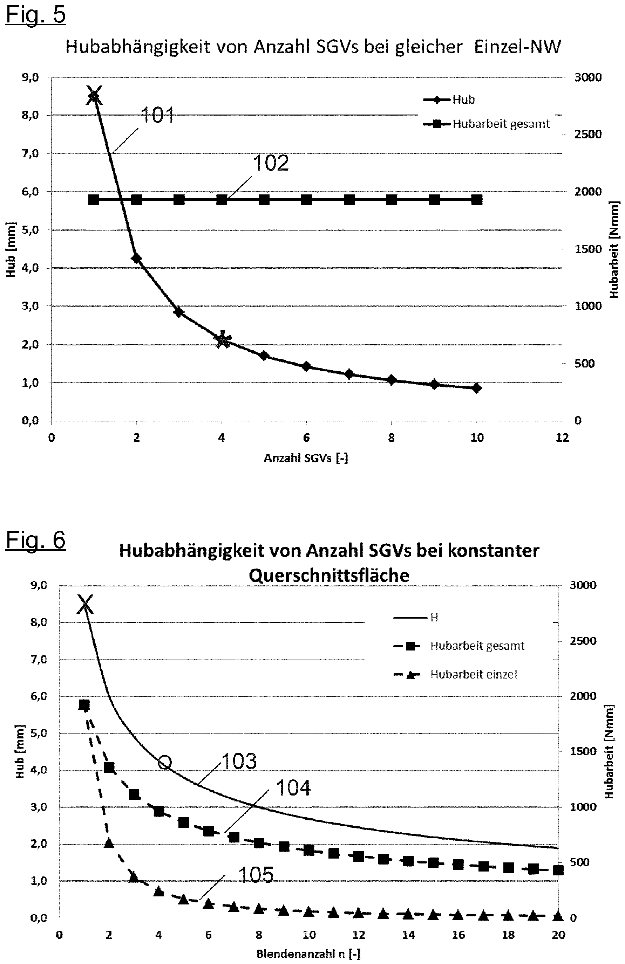

Figur 5 zeigt bei gegebenem Nennquerschnitt A_{Nenn} die Abhängigkeit des notwendigen Ventilhubes h zur Erzielung eines effektiven Querschnittes A_{eff}, der dem Nennquerschnitt A_{Nenn} entspricht in Abhängigkeit einer Anzahl von Schaltventilen mit identischem Einzelquerschnitt Aₙ. Kennlinie 101 zeigt hierbei den Ventilhub h, wobei mit Kennlinie 102 für die gesamte Zahl der verwendeten Schaltventile notwenige Hubarbeit Wₕ eingezeichnet ist.

In dem in Figur 5 dargestellten Diagramm ist auf der Abszisse die Anzahl der verwendeten Schaltventile und auf die Ordinate einerseits der sich hieraus in einem Ausführungsbeispiel ergebende Ventilhub h (link Ordinate) sowie sich hieraus ergebende Hubarbeit Wₕ (rechte Ordinate) aufgetragen.

Um bei einem vorgegebenen Druck und einem Nennquerschnitt A_{Nenn}, der im vorliegenden Beispiel dem Einzelquerschnitt Aₙ eines einzelnen Schaltventils 3 entsprechen soll, einen effektiven Querschnitt A_{eff} zu erreichen, muss ein einzelnes Schaltventil 3, wie dies beispielsweise in Figur 8a dargestellt ist, maximal geöffnet werden, d. h. derart, dass der Einzelquerschnitt Aₙ vollständig freigegeben wird. Für die vorliegende Betrachtung entspricht dies einem Ventilhub h von 8,25 mm.

Werden anstelle eines einzelnen Schaltventils 3 vier gleich große Schaltventile 3 mit jeweils einem Einzelquerschnitt Aₙ des einzelnen Schaltventils 3 verwendet, so reduziert sich der zur Erzielung des effektiven Querschnitts A_{eff} entsprechend dem Nennquerschnitt A_{Nenn} notwendige Ventilhub h auf ein Viertel, was im vorliegenden Ausführungsbeispiel etwa 2,06 mm entspricht.

Die Abhängigkeit des Ventilhubes h von der Anzahl der verwendeten Schaltventile 3 ist in Kennlinie 101 wiedergegeben. Aus dieser Kennlinie ist ersichtlich, dass die Reduktion des Ventilhubes h mit zunehmender Anzahl von verwendeten Schaltventilen 3 einen geringeren Effekt zeigt, wobei, wie dies Kennlinie 102 zu entnehmen ist, die insgesamt notwendige Hubarbeit Wh zur Öffnung der Ventilanordnung 1 konstant bleibt.

Dies resultiert daraus, dass die Hubarbeit Wₕ, berechnet aus der zur Öffnung der Ventilanordnung notwendigen Kraft multipliziert mit dem zur Erzielung des effektiven Querschnitts A_{eff} notwendigen Ventilhube h bei einer Vervierfachung der druckexponierten Ventilfläche bei gleichzeitiger Viertelung des notwendigen Ventilhubes h gleich bleibt.

In Figur 6 ist in einem Diagramm die Abhängigkeit des Ventilhubes h - wieder unter Voraussetzung eines konstanten Nennquerschnitts A_{Nenn} der Ventilanordnung 1 - von der Anzahl der verwendeten Schaltventile 3 dargestellt, wobei die Summe der Einzelquerschnitte Aₙ der verwendeten Schaltventile 3 dem Einzelquerschnitt Aₙ des einzelnen Schaltventils 3 aus Figur 8a bzw. dem Nennquerschnitt A_{Nenn} entspricht. In dem Diagramm in Figur 6 zeigt die Abszisse die Anzahl der verwendeten Schaltventile 3, wobei an der linken Ordinate der Ventilhub h und an der rechten Ordinate die notwendige Hubarbeit Wₕ aufgetragen ist. Entsprechend zeigt Kennlinie 103 den Ventilhub h, Kennlinie 104 die insgesamt notwendige Hubarbeit W_{ges} für sämtliche Schaltventile 3 der Ventilanordnung 1 und Kennlinie 105 die notwendige Hubarbeit Wₕ zur Öffnung eines einzelnen Schaltventils 3.

Auf der Hubkennlinie 103 in Figur 6 sind die in den Figuren 8a und 8c dargestellten Situationen eingezeichnet, d. h. der Hub bei Verwendung eines einzelnen Schaltventils 3 mit einem Einzelquerschnitt Aₙ sowie von vier Schaltventilen 3 deren Einzelquerschnitte in Summe dem Einzelquerschnitt Aₙ des Einzelventils entsprechen.

Wie aus Kennlinie 103 ersichtlich ist, kann bei einem derartigen Vorgehen der notwendige Ventilhub h zur Erzielung eines effektiven Querschnitts A_{eff}, der dem Nennquerschnitt A_{Nenn} entspricht, im Vergleich zu dem aus Figur 5 lediglich halbiert werden. Gleichzeitig kann aber die insgesamt notwendige Hubarbeit W_{ges} ebenfalls halbiert werden. Die Reduktion der Hubarbeit Wₕ resultiert dabei daraus, dass bei gleichbleibender druckexponierter Fläche der Ventilanordnung 1 und gleichzeitiger Halbierung des Ventilhubs h auch die entsprechend notwendige Hubarbeit Wₕ halbiert wird.

Die Reduzierung des Ventilhubs h auf die Hälfte bei einer Vervierfachung der Anzahl der Ventile bei gleichbleibender Gesamtquerschnittsfläche resultiert daraus, dass ein Ventildurchmesser in die Berechnung der Querschnittsfläche quadratisch, in eine Berechnung der bei einem Ventilhub freigegebenen Querschnittsfläche jedoch nur linear eingeht. Konsequenterweise kann bei einer insgesamt konstanten effektiven Querschnittsfläche A_{eff} und einer Vervierfachung der Anzahl der Ventile sowohl der notwendige Ventilhub h als auch die notwendige Hubarbeit halbiert werden.

In Figur 7 ist ein Kennlinienfeld eines elektromagnetischen Antriebs dargestellt, wobei die drei Situationen aus Figur 8 in das Kennlinienfeld eingetragen sind. Die Abszisse zeigt in dem in Figur 7 dargestellten Diagramm den Ventilhub h, wobei auf der Ordinate die im jeweiligen Arbeitspunkt erzielbare Kraft in Newton aufgetragen ist. Es sind beispielhaften Hub-Kraftkernlinien für Magnete mit folgender magnetischer Durchflutung gezeigt: Kennlinie 106 mit 1000AW, Kennlinie 107 mit 800AW, Kennlinie 108 mit 800AW, Kennlinie 109 mit 400AW und Kennlinie 110 mit 200AW. Durch eine Variation des Einzelquerschnitts Aₙ bei gegebenem Nennquerschnitt A_{Nenn} kann eine Verschiebung des Arbeitspunktes der einzelnen Schaltventile 3 auf der mit 111 gekennzeichneten Kennlinie erreicht werden.

Wie Figur 7 zu entnehmen ist, kann durch eine Vervielfachung der in einer Ventilanordnung 1 verwendeten Schaltventile 3 sowie eine geeignete Anpassung des Einzelquerschnitts Aₙ der Schaltventile 3 eine Anpassung des Arbeitspunkts des elektromagnetischen Antriebs erfolgen.

Insgesamt kann damit gemäß der vorliegenden Anmeldung nicht nur eine Optimierung hinsichtlich der mechanischen Eigenschaften (Leckage, Redundanz, Haltbarkeit), sondern auch hinsichtlich der elektrischen Eigenschaften erfolgen. Insgesamt kann ferner durch die Verwendung von Gleichteilen, sowie die Steigerung der Stückzahlen dieser Gleichteile eine signifikante Kostenreduktion bei der Herstellung der Ventilanordnung erreicht werden.

### Bezugszeichenliste

- 1: Ventilanordnung
- 3: Schaltventile
- 5: elektromagnetischer Antrieb
- 7: Gehäuse
- 8: Deckel
- 9: Zuleitung
- 11: Ableitung
- 13: elektrische Zuleitung
- 15: Anker
- 17: Sitz
- 19: Druckraum
- 21: Basisplatte
- 23: Druckfeder
- 101 - 105: Kennlinien
- 111: Kennlinei
- Aₙ: Einzelquerschnitt
- A_{Nenn}: Nennquerschnitt
- A_{eff}: effektiver Querschnitt
- h: Ventilhub
- Wₕ: Hubarbeit
- W_{ges}: Gesamthubarbeit

## Patentansprüche

1. Ventilanordnung (1) zur Zumessung eines gasförmigen Brennstoffes in Brennkraftmaschinen mit einer Mehrzahl elektromagnetisch betätigbarer Schaltventile (3) eines Einzelquerschnitts (Aₙ), wobei der Einzelquerschnitt (Aₙ) eines Schaltventils (3) einen maximal möglichen Querschnitt des Ventils (3) bei vollständiger Öffnung desselben darstellt, wobei die Schaltventile (3) als Sitzventile ausgestaltet sind, die Ventilanordnung (1) einem Verbrennungsraum zuordenbar ist und die Ventilanordnung (1) einen Nennquerschnitt (Aₙₑₙₙ) zur Bereitstellung eines vorgegebenen Massenstroms aufweist,
**dadurch gekennzeichnet, dass**
die Sitzventile derart ausgelegt sind, dass
- eine Summe der Einzelquerschnitte (Aₙ) größer als der Nennquerschnitt (Aₙₑₙₙ) ist,
- ein effektiver Querschnitt (A_{eff}), der die Summe der bei einem Hub sämtlicher Ventile der Ventilanordnung (1) freigegebenen Querschnitte darstellt, gleich dem Nennquerschnitt (Aₙₑₙₙ) ist, wobei der Ventilhub (h) der Ventile kleiner als ein maximaler Ventilhub bei vollständiger Öffnung derselben ist, und
- der effektive Querschnitt (A_{eff}) geringer als die Summe der Einzelquerschnitte (Aₙ) ist.

2. Ventilanordnung (1) gemäß Anspruch 1,
**dadurch gekennzeichnet, dass**
die Schaltventile (3) jeweils einen eigenen elektromagnetischen Antrieb (5) aufweisen.

3. Ventilanordnung (1) gemäß Anspruch 2,
**dadurch gekennzeichnet, dass**
die Schaltventile (3) gemeinsam oder separat ansteuerbar sind.

4. Ventilanordnung (1) gemäß einem der vorhergehenden Ansprüche,
**dadurch gekennzeichnet, dass**
die Ventilanordnung (1) wenigstens zwei, bevorzugt wenigstens vier Schaltventile (3) aufweist.

5. Ventilanordnung (1) gemäß einem der vorhergehenden Ansprüche,
**dadurch gekennzeichnet, dass**
die Schaltventile (3) in einem gemeinsamen Gehäuse (7) angeordnet sind, wobei das Gehäuse (7) eine Zuleitung (9) und eine Ableitung (11) für den gasförmigen Brennstoff aufweist.

6. Ventilanordnung (1) gemäß einem der vorhergehenden Ansprüche,
**dadurch gekennzeichnet, dass**
die Schaltventile (3) einen identischen Aufbau aufweisen.

7. Ventilanordnung (1) gemäß einem der vorhergehenden Ansprüche,
**dadurch gekennzeichnet, dass**
die Schaltventile (3) einen im Wesentlichen drehteilbasierten Aufbau aufweisen.

8. Ventilanordnung (1) gemäß einem der vorhergehenden Ansprüche,
**dadurch gekennzeichnet, dass**
der maximale Ventilhub (h) weniger als 5 mm, vorzugsweise weniger als 3 mm beträgt.

9. Ventilanordnung (1) gemäß einem der vorhergehenden Ansprüche, mit einem Nennquerschnitt (Aₙₑₙₙ) von 700 mm² und 6 Schaltventile, wobei der Ventilhub (h) 1,5 mm beträgt.

10. Verwendung einer Ventilanordnung (1) gemäß einem der vorhergehenden Ansprüche in einem Großgasmotor, vorzugsweise für maritime und/oder stationäre Anwendungen mit einer Leistung von vorzugsweise wenigstens 500 kW.

## Claims

1. Valve arrangement (1) for the metering of a gaseous fuel in internal combustion engines with numerous electromagnetically operable switching valves (3) of an individual cross section (Aₙ), wherein the individual cross section (Aₙ) of a switching valve (3) exhibits a maximum possible cross section of the valve (3) when it is completely open, wherein the switching valves (3) are implemented as seat valves, the valve arrangement (1) can be disposed in a combustion chamber and the valve arrangement (1) has a standard cross section (Aₙₑₙₙ) for providing a specified flow rate,
**characterized in that**
the seat valves are designed such that
- the sum of the individual cross sections (Aₙ) is larger than the standard cross section (Aₙₑₙₙ),
- an effective cross section (A_{eff}), which represents the sum of the enabled cross sections of all valves of the valve arrangement (1) at a hub, is equivalent to the standard cross section (Aₙₑₙₙ), wherein the valve hub (h) of the valves is smaller than a maximum valve hub when fully opened, and
- the effective cross section (A_{eff}) is smaller than the sum of the individual cross sections (Aₙ).

2. Valve arrangement (1) in accordance with claim 1,
**characterized in that**
the switching valves (3) each have their own electromagnetic drive (5).

3. Valve arrangement (1) in accordance with claim 2,
**characterized in that**
the switching valves (3) can be controlled together or separately.

4. Valve arrangement (1) in accordance with any of the preceding claims,
**characterized in that**
the valve arrangement (1) comprises at least two, preferably at least four switching valves (3).

5. Valve arrangement (1) in accordance with any of the preceding claims,
**characterized in that**
the switching valves (3) are disposed in the same housing (7), wherein the housing (7) has an inlet (9) and an outlet (11) for the gaseous fuel.

6. Valve arrangement (1) in accordance with any of the preceding claims,
**characterized in that**
the switching valves (3) have an identical construction design.

7. Valve arrangement (1) in accordance with any of the preceding claims,
**characterized in that**
the switching valves (3) have a construction design based mostly on rotatable parts.

8. Valve arrangement (1) in accordance with any of the preceding claims,
**characterized in that**
the maximum valve hub (h) is smaller than 5 mm, preferably smaller than 3 mm.

9. Valve arrangement (1) in accordance with any of the preceding claims,
which has a standard cross section (Aₙₑₙₙ) of 700 mm² and 6 switching valves, wherein the valve hub (h) comprises 1.5 mm.

10. Usage of a valve arrangement (1), in accordance with any of the preceding claims, in a large gas engine, preferably for maritime and/or stationary applications, which has an output of preferably at least 500 kW.

## Revendications

1. Dispositif de soupapes (1) pour doser un combustible gazeux dans un moteur à combustion interne comprenant un ensemble de soupapes de commutation (3) à commande électromagnétique ayant la même section simple (Aₙ),
cette même même section simple (Aₙ) d'une soupape de commutation (3) étant la section maximale possible de la soupape (3) lorsque celle-ci est complètement ouverte,
les soupapes de commutation (3) étant réalisées sous la forme de soupapes à siège, le dispositif de soupapes (1) étant associé à une chambre de combustion et le dispositif de soupapes (1) a une section nominale (Aₙₑₙₙ) pour fournir un débit massique prédéfini,
dispositif **caractérisé en ce que** les soupapes à siège sont telles que
- la somme des sections simples (Aₙ) est supérieure à la section nominale (Aₙₑₙₙ),
- la section effective (A_{eff}) qui représente la somme de toutes les sections libres pour la levée de toutes les soupapes du dispositif de soupapes (1) est égale à la section nominale (Aₙₑₙₙ), la levée (h) des soupapes étant inférieure à la levée maximale pour leur ouverture complète et,
- la section effective (A_{eff}) est inférieure à la somme des sections simples (Aₙ).

2. Dispositif de soupapes (1) selon la revendication 1,
**caractérisé en ce que**
les soupapes de commutation (3) ont chacune un entraînement électromagnétique (5) propre.

3. Dispositif de soupapes selon la revendication 2,
**caractérisé en ce que**
les soupapes de commutation (3) sont commandées en commun ou séparément.

4. Dispositif de soupapes selon l'une des revendications précédentes,
**caractérisé en ce que**
le dispositif de soupapes (1) comporte au moins deux et de préférence au moins quatre soupapes de commutation (3).

5. Dispositif de soupapes (1) selon l'une des revendications précédentes,
**caractérisé en ce que**
les soupapes de commutation (3) sont logées dans un boîtier (7), commun, le boîtier (7) ayant une conduite d'entrée (9) et une conduite de sortie (11) pour le combustible gazeux.

6. Dispositif de soupapes (1) selon l'une des revendications précédentes,
**caractérisé en ce que**
les soupapes de commutation (3) ont une structure identique.

7. Dispositif de soupapes (1) selon l'une des revendications précédentes,
**caractérisé en ce que**
les soupapes de commutation (3) ont essentiellement une structure de pièces tournantes.

8. Dispositif de soupapes (1) selon l'une des revendications précédentes,
**caractérisé en ce que**
la levée maximale (h) est inférieure à 5 mm, de préférence inférieure à 3 mm.

9. Dispositif de soupapes (1) selon l'une des revendications précédentes,
ayant une section nominale (Aₙₑₙₙ) de 700 mm² et 6 soupapes de commutation dont la levée (h) est égale à 1,5 mm.

10. Application d'un dispositif de soupapes (1) selon l'une des revendications précédentes à un grand moteur à gaz, de préférence à un moteur de marine et/ou à des applications stationnaires d'une puissance, de préférence, d'au moins 500 kW.
